# EUROPÄISCHE PATENTANMELDUNG

(11) **EP 4 782 115 A1**
(43) Veröffentlichungstag der Anmeldung: **29.07.2026**
(21) Anmeldenummer: 25154483.9
(22) Anmeldetag: 28.01.2025
(51) Int. Cl.: B05D 1/26, B29C 41/00, G06T 7/00, B05C 5/02

(54) **VERFAHREN ZUR ÜBERWACHUNG EINES DISPENSER-AUFTRAGS EINER VISKOSEN MASSE IN EINEM FERTIGUNGSPROZESS, COMPUTERPROGRAMM UND COMPUTERSYSTEM**

(71) Anmelder: Siemens Aktiengesellschaft, 80333 München (DE)
(72) Erfinder: Hellner, Luca-Julien, 15344 Strausberg (DE); Jarchoff, Kay, 16567 Schönfließ (DE); Knofe, Rüdiger, 14513 Teltow (DE); Müller, Bernd, 16259 Falkenberg (DE); Sommerfeld, Dennis, 12347 Berlin (DE); Wittreich, Ulrich, 16727 Velten (DE); Wormuth, Dirk, 12203 Berlin (DE)
(74) Vertreter: Siemens Patent Attorneys

(57) **Zusammenfassung**

Die Erfindung betrifft ein Verfahren zur Durchführung eines Dispenser Auftrags (2) einer viskosen Masse (14) in einem Fertigungsprozess (4) mit einem Verfahren zur Überwachung des Dispenser Auftrags (2) umfassend folgende Schritte:
- Festlegen von Benetzungsflächen (6) in Bezug auf eine Abbildung (8) einer Applikationsoberfläche (10)
- Erzeugen einer Thermographie-Aufnahme (12) von der selektiv mit viskosen Masse (14) versehenen Applikationsoberfläche (10),
- Festlegen von Justierpunkten (16) auf der Applikationsoberfläche (10), die auf der Abbildung (8) und auf der Thermographie-Aufnahme (12) identifizierbar sind,
- Überlagern der Abbildung (8) und der Thermographie-Aufnahme (12) anhand der Justierpunkte (16)
- Vergleichen der Position von Emissionsgrad-Anomalien (18) auf der Applikationsoberfläche (10), die mittels der Thermographie-Aufnahme (12) identifiziert werden mit der Position der Benetzungsfläche (6) auf der Abbildung (8).

## Beschreibung

Die Erfindung betrifft ein Verfahren zur Überwachung eines Dispenser Auftrags einer viskosen Masse in einem Fertigungsprozess mit den Merkmalen des Patentanspruchs 1 sowie ein Computerprogramm, umfassend einen digitalen Zwilling zur Steuerung eines Verfahrens nach Patentanspruch 14 sowie in einem Computersystem mit einem Computerprogramm nach Patenanspruch 15.

Bei Fertigungsprozessen mit Materialauftrag durch Dispensen einer viskosen Masse (z.B. von Klebstoffen, Lotpasten, Leitklebern, Unterfüllmaterialien, Lacken und weitere) muss in einem hochautomatisierten Prozess sichergestellt werden, dass die viskose Masse an dem vorgesehen Ort sicher appliziert ist.

Aktuelle Überprüfungsmöglichkeiten für den Dispenser-Auftrag sind entweder stichprobenartige Überprüfungen mit speziellen Produkt-Dummys, dabei handelt es sich um Trägerplatten mit Bohrungen auf der Oberseite und einem dort applizierten Indikatorpapier. Alternativ können auch Detektoren einer Unterbrechung eines Lichtstrahls mittels zum Beispiel Laserlichtschranken den Auftrag überprüfen. Eine Detektion der viskosen Masse auf den zu fertigenden Produkten, ist insbesondere bei einem transparenten Erscheinungsbildes der Masse mit visuellen Verfahren nur schwer möglich. Eine kontinuierliche automatisierte und fertigungsbegleitende Überprüfung der Transferqualität auf Produktniveau ist daher derzeit nur unbefriedigend zu gewährleisten.

Die Aufgabe der Erfindung besteht darin, ein Verfahren zur Durchführung eines Dispenser Auftrags 2 einer viskosen Masse in einem Fertigungsprozess und dessen Überwachung bereitzustellen, durch das vor dem eigentlichen irreversiblen Fertigungsprozess Mängel bei der Auftragung der viskosen Masse erkannt werden können.

Die Lösung der Aufgabe besteht in einem Verfahren zur Überwachung eines Dispenser-Auftrags mit den Merkmalen des Patentanspruchs 1 sowie in einem Computerprogramm, umfassend einen digitalen Zwilling zur Steuerung eines Verfahrens nach Patentanspruch 14 sowie in einem Computersystem mit einem Computerprogramm nach Patenanspruch 15.

Das erfindungsgemäße Verfahren zur Durchführung eines Dispenser-Auftrags 2 einer viskosen Masse in einem Fertigungsprozess 4 mit einem Verfahren zur Überwachung des Dispenser-Auftrags umfasst folgende Schritte::
- Festlegen von Benetzungsflächen in Bezug auf eine Abbildung einer Applikationsoberfläche
- Erzeugen einer Thermographie-Aufnahme von der selektiv mit viskosen Masse versehenen Applikationsoberfläche,
- Festlegen von Justierpunkten auf der Applikationsoberfläche, die auf der Abbildung und auf der Thermographie-Aufnahme identifizierbar sind,
- Überlagern der Abbildung und der Thermographie-Aufnahme anhand der Justierpunkte
- Vergleichen der Position von Emissionsgrad-Anomalien auf der Applikationsoberfläche, die mittels der Thermographie-Aufnahme identifiziert werden mit der Position der Benetzungsfläche auf der Abbildung.

Das beschriebene Verfahren weist den Vorteil auf, dass die Applikationsoberfläche, also beispielsweise die Oberfläche auf die eine Klebfläche aufgebracht ist, vor dem klebenden Verbinden thermografisch untersucht wird und somit Auftragungsmängel vor der endgültigen Fertigstellung behoben werden können. Es hat sich herausgestellt, dass nach einer bestimmten Zeit nach dem Auftragen an den Benetzungsflächen Temperaturanomalien gegenüber der Umgebungsfläche auftreten. Diese Temperaturanomalien, die im Weiteren noch genauer definiert werden, resultieren u. a. auch aus der Verdampfungsenthalpie, die beim partiellen Verdampfen von Bestandteilen der viskosen Masse, insbesondere Lösungsmittel, auftreten und der benetzten Oberfläche Wärme entziehen. Aus diesem Grund sind die benetzten Oberflächen der Applikationsoberflächen kühler als die nicht benetzten Oberflächen. Vergleicht man die Thermografie-Aufnahme mit einer vor der Benetzung durchgeführten Abbildung (einer fotographischen Abbildung oder auch einem digitalen Zwilling der Abbildung aus einem CAD-System), so können mittels fester Punkte, die hier als Justierpunkte bezeichnet werden, festgestellt werden, ob die bestimmten, festgelegten Benetzungsflächen auch tatsächlich mit der viskosen Masse versehen sind und diese auch ausreichend appliziert ist, wenn dort die Temperaturen niedriger sind als an den übrigen Flächen der Applikationsoberfläche.

Auf diese Weise kann gezielt Einfluss auf den Fertigungsprozess genommen werden und somit die Qualitätssicherung des Prozesses gegenüber dem Stand der Technik verbessert werden.

Für die in den Patentansprüchen verwendeten Begriffe sind die folgenden Definitionen angegeben:
Fertigungsprozess: Unter einem Fertigungsprozess werden allgemeine alle Prozesse verstanden, bei denen mittels eines Dispensers viskose Masse auf eine Benetzungsfläche, in der Regel eine Substrat- oder Bauteiloberfläche, aufgebracht wird. Derartige Fertigungsprozesse sind insbesondere Fertigungsverfahren bei denen Klebstoffe, Lotpasten, Leitkleber, Unterfüllmaterialien, Sinterpasten aber auch Silikone, Lacke und/oder Harze, die mittels eines Dispenser auf die Benetzungsoberfläche aufgebracht werden. Dabei sei der Begriff Dispenser hierbei als eine Dosiervorrichtung für viskose Massen definiert, die eine Viskosität aufweisen, die größer ist als 50 mPa s insbesondere größer als 500 mPa s. Das Ausbringen bzw. das Dosieren der viskosen Masse erfolgt dabei mittels eines hydraulischen Drucks, eines Luftdrucks, eines Kolbendrucks, einer Spindel und/oder eines Jet-Ventils und es wird dabei eine vordefinierte Menge an viskoser Masse auf der Benetzungsfläche appliziert. Der Dispenser unterscheidet sich daher insofern von anderen Aufbringungsmethoden wie beispielsweise einer Sprühdüse analog eines Tintenstrahldruckers oder das Aufsprühen eines Flussmittels, da durch einen Dispenser nach dieser Definition eine viskose Masse auf die Applikationsoberfläche aufgebracht wird, die sich wiederum in ihrer Thermographie-Abbildung von einer niedrigviskosen Flüssigkeit mit einem höheren Anteil leicht verdampfenden Lösungsmitteln unterscheidet

Die Abbildung der Applikationsoberfläche kann eine Konstruktionsdarstellung beispielsweise aus einem CAD-Programm sein, sie kann aber auch eine fotographische Abbildung der real existierenden Muster-Applikationsoberfläche sein. Die Abbildung ist in einem Computersystem, beispielsweise in einer Anlagensteuerung wie beispielsweise in einer Siemens S7 1500 und/oder in ihren Peripheriegeräte hinterlegt oder sie wird nach der Aufnahme dort hinterlegt. In der Regel wird die Abbildung in Form von Bildpunkten in das Computersystem bzw. in die Anlagensteuerung übertragen. Das gleiche gilt auch für die Thermographie-Aufnahme, die bevorzugt in Form einer Infrarot-Aufnahme durchgeführt wird.

Eine Thermographieaufnahme ist eine Ermittlung von Wärmestrahlung, die in dem betrachteten Fertigungsumfeld in der Regel als Infrarot-Emission auftritt und sie lässt im selben Umfeld auf unterschiedliche Temperaturen schließen. Der unterschiedlicher Emissionsgrad verschiedener Materialien muss jedoch durch Kalibrierung ermittelt werden. Emission bedeutet in dem üblicherweise vorliegenden Temperaturumfeld Emission in Form von IR-Strahlung. Unterschiedliche Materialen auf derselben Oberfläche mit unterschiedlicher IR-Emission können allerdings bei derselben Temperatur unterschiedliche Emissionsgrade aufweise. Dies kann dazu genutzt werden, unterschiedliche Materialen auf einer Oberfläche zu identifizieren.

Justierpunkte sind geometrische Gebilde (nicht nur Punkte im mathematischen Sinne) auf der Applikationsoberfläche, die ausreichend charakteristisch sind, um eine eindeutige Zuordnung der Darstellung der Abbildung und der Thermographie-Aufnahme zu gewährleisten. Dabei sind zur eindeutigen Justierung bevorzugt mindestens zwei Justierpunkte vorgesehen. Dabei können beispielsweise die Benetzungsflächen bereits als Justierpunkte dienen. Anhand der festgelegten Justierpunkte können die Abbildung der Applikationsoberfläche und die Thermographie-Aufnahme übereinandergelegt, das heißt überlagert werden. Dabei wird der Begriff Überlagern im übertragenen Sinne verwendet, analog zu einem Bild und einer transparenten Folie. Bei rein digital vorliegenden Bildern besteht das Überlagern in einem elektronischen Vergleichen, beispielsweise durch ein Bildanalyse-Programm, wobei die Aufnahme und die Abbildung anhand der festgelegten Justierpunkte mittels einzelner Bildpunkte oder Bildpunktcluster ausgewertet werden.

Emissionsgrad-Anomalien sind in aller Regel Temperaturanomalien, diese sind auf der Thermographie-Aufnahme sichtbare Punkte oder Flächen, die gegenüber der Umgebungsfläche einen Temperaturunterschied (oder auch einen Materialunterschied) aufweisen. Dabei tritt in der Regel innerhalb einer Temperaturanomalie nicht zwingend eine konstante Temperatur auf, vielmehr liegt dort eine Temperaturintervall vor, das sich mit einem Temperaturintervall, das die Umgebungsflächen aufweisen, nicht schneidet. Daher ist für die Bestimmung einer Grenze zwischen der Temperaturanomalie und der Umgebungsfläche die Festlegung einer Schwelltemperatur also ein Temperaturschwellwert oder allgemeiner ein Emissionsgradschwellwert zweckmäßig.

Unter dem Begriff Zeitintervall wird der Zeitraum vom Aufbringen des Flussmittels auf die Flussmittelbenetzungsfläche bis zu einem definierten Zeitpunkt einer abschließenden Thermographie-Aufnahme verstanden. Da aber in diesem Zeitintervall mehrere Thermographie-Aufnahmen vorgenommen werden können (beispielsweise durch eine Infrarot-Videoaufnahme), kann es auch zweckmäßig sein, die Temperatur als Funktion der Zeit zu betrachten und mit einem empirisch bestimmten Temperatur-Zeit-Verlauf (Referenzverlauf) zu vergleichen. In diesem Fall wird unter dem Begriff Temperatur ein Punkt auf der Temperatur-Zeit-Kurve verstanden, beispielsweise auch der Endpunkt der Kurve. Hierfür ist es vorteilhaft, einen Toleranzbereich des Referenzverlaufs zu definieren. Dies kann beispielsweise eine oder zwei zum Referenzverlauf parallel verlaufende Kurven sein, in deren Bereich der betrachtete Temperatur Zeit-Verlauf liegen sollte. Der betrachtete Zeitverlauf der Temperatur-Zeit-Betrachtung entspricht dem Zeitintervall. Dabei ist es nicht zwingend notwendig, dass innerhalb des Zeitintervalls mehrere Thermographie-Aufnahmen bewertet werden.

Ein digitaler Zwilling ist eine digitale Repräsentation eines materiellen oder immateriellen Objekts oder Prozesses aus der realen Welt in der digitalen Welt. Digitale Zwillinge ermöglichen einen übergreifenden Datenaustausch. Sie sind dabei mehr als reine Daten und bestehen aus Modellen des repräsentierten Objekts oder Prozesses und können daneben Simulationen, Algorithmen und Services enthalten, die Eigenschaften oder Verhalten des repräsentierten Objekts oder Prozesses beschreiben, beeinflussen, oder Dienste darüber ermöglichen.

In einer bevorzugten Ausgestaltungsform der Erfindung wird ein Emissionsschwellwert für die Temperaturanomalien festgelegt. Dies erleichtert es für die Auswertung der Emissionsanomalien, diese gegenüber den Umgebungsflächen der Applikationsoberfläche abzugrenzen.

In einer weiteren bevorzugten Ausgestaltungsform der Erfindung wird eine Maßnahme zur Beeinflussung des Fertigungsprozess eingeleitet, wenn innerhalb eines Zeitintervalls nach Aufbringen der viskosen Masse eine mittels der Thermographie-Aufnahme bestimmter Emissionsgrad E an einer Benetzungsfläche jenseits des Emissionsschwellwertes liegt. Auf diese Weise kann durch direktes Eingreifen in den Fertigungsprozess und in den vorgelagerten Dispenser-Auftrag die Qualität des zu fertigenden Bauteils (beispielsweise die Klebeverbindung) verbessert werden.

Eine Maßnahme kann dabei sein, ein erneutes Auftrage der viskosen Masse (beispielsweise einer Lotpaste oder eine Klebepaste) an der detektierten Benetzungsfläche einzuleiten. Eine andere vorteilhafte Maßnahme kann darin bestehen, einen Reinigungsprozess des Dispensers, insbesondere seiner Applikationsöffnung vorzunehmen.

Die Temperatur innerhalb der Temperaturanomalie kann zu einem festen Zeitpunkt nach dem Auftrag der viskosen Masse gemessen werden. Es ist jedoch auch zweckmäßig, die Temperatur als Funktion der Zeit zu betrachten. Auf diese Weise kann das Verdampfungsverhalten der aufgebrachten viskosen Masse bzw. Bestandteile der Masse genauer beobachtet werden und somit stabilere Informationen über die tatsächlich aufgebrachten Menge der Masse an die bestimmte Stelle ermittelt werden. Auf diese Weise kann eine noch bessere Qualitätssicherung erfolgen.

Hierzu ist es wiederum zweckmäßig, dass ein Referenzverlauf einer Temperatur-Zeit-Kurve an einer definierten Benetzungsfläche Z aufgenommen wird und mit dem betrachteten Temperatur-Zeit-Verlauf verglichen wird. D. h. ein empirisch bestimmter Referenzverlauf der Temperaturentwicklung mit der Zeit, bei dem die aufgebrachte Menge an viskoser Masse genau bekannt ist, kann dazu dienen, den aktuell gemessenen Temperatur-Zeit-Verlauf mit einer bestimmten Menge an Masse in Verbindung zu bringen. Hierfür ist es wiederum zweckmäßig, wenn ein Toleranzbereich des Referenzverlaufs definiert wird. Die Maßnahme zur Beeinflussung des Fertigungsprozesses wird erst dann eingeleitet, wenn der betrachtete Temperatur-Zeit-Verlauf außerhalb dieses Toleranzbereichs liegt.

Die Maßnahme erfolgt insbesondere erst dann, wenn die Temperatur an der Benetzungsfläche über dem Temperaturschwellwert liegt. Wenn dies der Fall ist, wurde zu wenig viskose Masse aufgetragen, da wie bereits erwähnt, insbesondere die Verdampfungsenthalpie von Bestandteilen der viskosen Masse zu einer lokalen Abkühlung der Applikationsoberfläche führt. Ist diese Abkühlung aufgrund eines zu geringen Auftrags nicht erfolgt, bleibt die Temperatur höher als der Temperaturschwellwert.

In einer weiteren Ausgestaltungsform der Erfindung ist die Thermografie-Aufnahme so gestaltet, dass eine Mehrzahl von derartigen Aufnahmen innerhalb eines Zeitraums erfasst werden. Dies bedeutet, dass i. d. R. eine Videoaufnahme erfolgt. Insbesondere kann dies mittels einer Infrarot-Videokamera erfolgen. Im Gegenzug kann die Abbildung eine lichtfotografische Aufnahme der zu beobachtenden Applikationsoberfläche sein. Diese lichtfotografische Aufnahme kann an der aktuellen Applikationsoberfläche nach dem Auftrag von viskoser Masse vorgenommen werden und dann in digitaler Form in ein Computerprogramm bzw. in ein Computersystem eingebracht werden.

Ein weiterer Bestandteil der Erfindung ist ein Computerprogramm, das einen digitalen Zwilling umfasst, der zur Steuerung eines Verfahrens zur Überwachung eines Auftrags von viskoser Masse in einem Fertigungsprozess nach einem der Ansprüche 1 - 13 dient. In diesem Computerprogramm liegt die Abbildung als digitale Abbildung vor und die Benetzungsflächen sowie die Justierpunkte sind als Bestandteile der digitalen Abbildung gespeichert. Dieses Computerprogramm dient bevorzugt dazu, die Abbildung mit den entsprechenden darauf eingezeichneten Punkten mit den Thermografie-Aufnahmen zu vergleichen und automatisiert eine Fehlermeldung hervorzubringen, wenn gemäß der vorgenannten Verfahrensansprüche der Dispenser-Auftrag nicht den vorgegebenen Maßgaben gemäß der Abbildung entspricht.

Ein weiterer Bestandteil der Erfindung ist ein Computersystem mit einem Computerprogramm nach Anspruch 14. Das Computersystem kann beispielsweise eine Prozesssteuerung sein. Es kann jedoch auch eine Cloud-basierte Steuerungslösung angewandt werden.

Weitere Beispiele und weitere vorteilhafte Merkmale der Erfindung werden anhand der folgenden Figuren näher erläutert. Dabei handelt es sich um rein exemplarische Ausgestaltungsformen, die keine Einschränkung des Schutzbereichs darstellen. Merkmale in einer allgemeinen Bezeichnung und mit einer darauf beruhenden speziellen Bezeichnung werden dabei mit dem selben Bezugszeichen versehen.

Dabei zeigen:
Figur 1, einen schematischen Ablaufplan des Verfahrens und eines beispielhaften Prozesses zum Aufbringen einer viskosen Masse mittels eines Dispensers,
Figur 2, eine schematische Darstellung des Auftrags einer viskosen Masse mittels eines Dispensers auf eine Applikationsoberfläche,
Figur 3a und c, Thermografie-Aufnahmen der Applikationsoberfläche,
Figur 3b, eine Abbildung der Applikationsoberfläche und

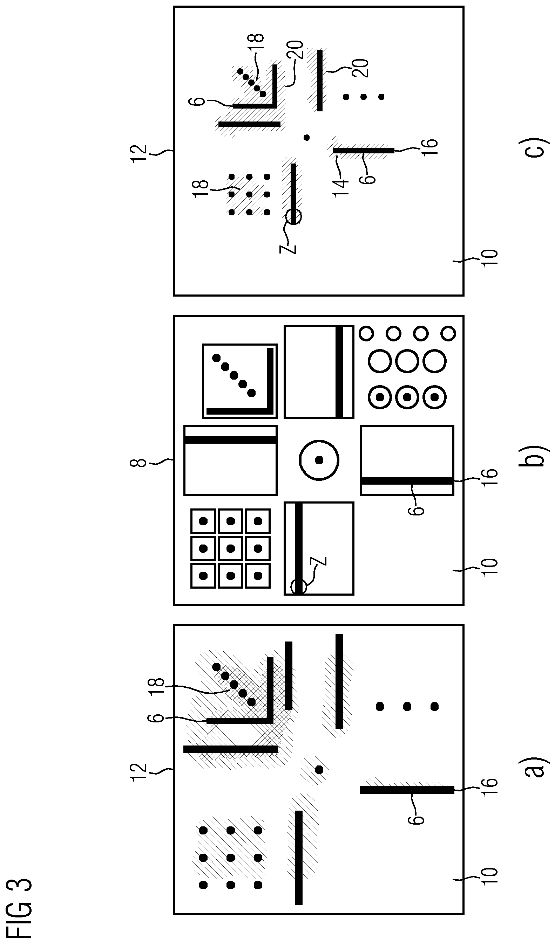

Figur 3, eine Zeit-Temperatur-Kurve von Temperaturanomalien auf der Applikationsoberfläche.

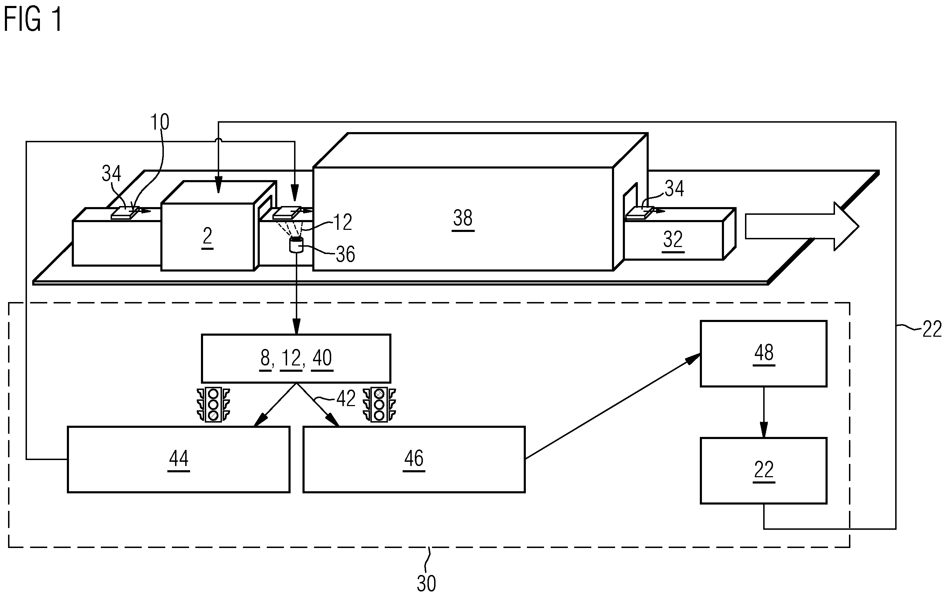

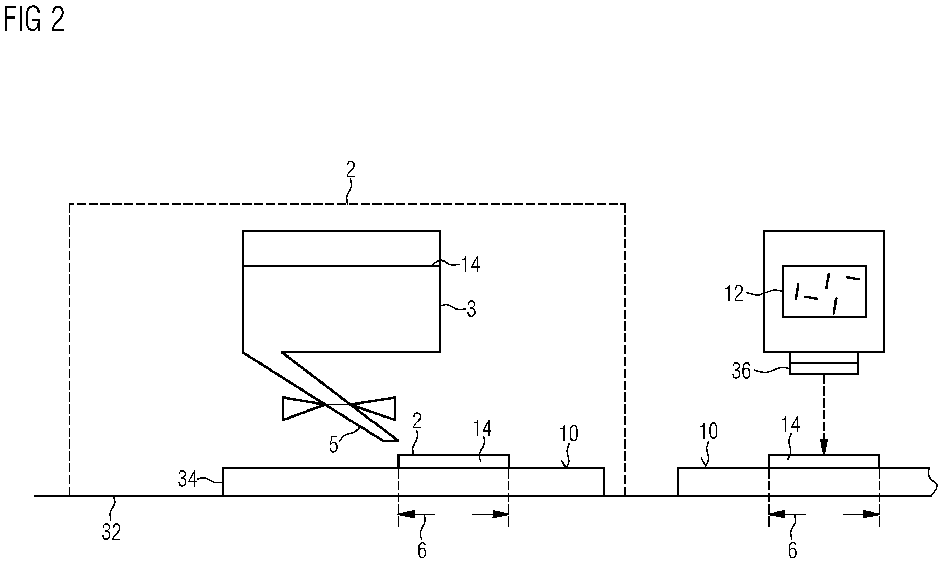

In Figur 1 ist eine schematische Darstellung eines Fertigungsprozess 4, bei dem eine viskose Masse 14, beispielsweise Klebstoffe, Lotpasten, Leitkleber, Unterfüllmaterialien, Sinterpasten aber auch Silikone, Lacke und/oder Harze, mittels eines Dispenser 3 auf eine Applikationsoberfläche aufgebracht werden, dargestellt. Ferner ist ein logischer Ablauf eines in den Fertigungsprozess integrierten Verfahrens zur Überwachung eines Dispenser-Auftrags im Rahmen des Fertigungsprozesses gegeben. Zunächst ist ein Transportband 32 vorgesehen, auf dem ein Bauteil oder Halbzeug 34 mit einer Applikationsoberfläche 10 transportiert wird. In Figur 2 ist der eigentliche Auftragungsprozess (in Figur 1 allgemein Dispenser Auftrag 2 bezeichnet) der viskosen Massen 14 mittels eines Dispensers 3 näher veranschaulicht. Dabei kann eine Applikationsnase 5 des Dispensers 3 mittels einer Steuerung, die beispielsweise integraler Bestandteil eines Computersystems 30 sein kann, in ihrem Winkel zur Applikationsoberfläche 10 bewegt werden. Ebenso kann durch diese beschriebene Steuerung der Dispenser-Auftrag 2 gezielt unterbrochen werden, sodass zum vorgesehenen Zeitpunkt viskose Masse 14 am vorgesehenen Ort auf der Applikationsoberfläche 10, auftrifft.

Im Weiteren erfolgt nun das Verfahren zur Überwachung des Dispenser-Auftrags 2. Hierzu wird eine Thermografie-Aufnahme 12 mittels einer Infrarotkamera 36 aufgenommen, wobei die Thermografie-Aufnahme 12 in ein Computersystem 30 integriert wird. In dem Computersystem 30 ist ferner eine Abbildung 8 der Applikationsoberfläche 10 hinterlegt. Diese Abbildung 8 kann beispielsweise ein Auszug aus einem CAD-System des Bauteils 34 sein (das Bauteil 34 kann auch ein Halbzeug sein), es kann jedoch auch zweckmäßig sein, gleichzeitig mit der Thermografie-Aufnahme 12 auch jeweils eine lichtfotografische Aufnahme der Applikationsoberfläche 10 vorzunehmen. In diesem Fall werden sowohl die lichtfotografische Aufnahme der Abbildung 8 als auch die Thermografie-Aufnahme 12 während des Prozesses in das Computersystem 30 eingegeben und digital verglichen.

Bei diesem digitalen Vergleich, der auch als Überlagerung der Abbildung 8 und der Aufnahme 12 bezeichnet wird, werden sowohl die Abbildung 8 als auch die Thermografie-Aufnahme 12 in einzelne Bildpunkte zerlegt und bezüglich vorgegebener Justierpunkte 16 verglichen. Die Justierpunkte 16 sind dabei charakteristische Punkte, die sowohl auf der Abbildung 8 als auch auf der Thermografie-Aufnahme 12 elektronisch identifizierbar sind. Dabei können zweckmäßige Justierpunkte 16 die Benetzungsflächen 6 sein. Die Benetzungsflächen 6 können z. B. bei einem Klebeprozess die Positionen auf dem Bauteil 34 sein, auf denen ein Klebestreifen aufgebracht wird, bei einem Lötprozess sind es die Flächen, die mit einer Lötpaste versehen werden.

Es hat sich herausgestellt, dass durch das Aufbringen der viskosen Masse14 ein Verdampfungsprozess der flüchtigen Substanzen der Masse 14 eine lokale Abkühlung der Applikationsoberfläche 10 auftritt. Diese lokale Abkühlung ist durch die Verdampfungsenthalpie begründet, die der Benetzungsoberfläche 10 genau an der Stelle der Benetzungsfläche 6 Wärme lokal entzieht. Durch die Thermografie-Aufnahme 12, die in der Regel in Form einer Infrarotaufnahme vorliegt, kann diese lokale Abkühlung auf der Leiterplattenoberfläche 10 in Form von Temperaturanomalien beobachtet werden. Auf die Definition und die Auswertung dieser Temperaturanomalien 18 wird im Weiteren noch eingegangen werden. Ein zusätzlicher Effekt in diesem Zusammenhang besteht darin, dass unterschiedliche Materialien und unterschiedlich behandelte Oberflächen bei derselben Temperatur einen unterschiedlichen Emissionsgrad aufweisen. Diese Abweichungen können in der Thermographie Aufnahme entweder heraus kalibriert werden oder sie könnten direkt für die Detektion der aufgetragenen viskosen Masse genutzt werden.

Diese beschriebene Überlagerung der Aufnahme 12 und der Abbildung 8 erfolgt in dem bereits erwähnten Computersystem 30. Dieses Computersystem 30 kann dabei einen Computer sowie eine Datenbank enthalten. Ferner kann das Computersystem 30 eine Prozesssteuerungseinheit wie beispielsweise eine Siemens Simatic S 7 1500 enthalten. Diese Steuereinrichtung, die hier nicht explizit dargestellt ist, steuert den Prozess und erhält aus anderen Komponenten des Computersystems 30 Informationen zur Steuerung. Es ist auch möglich, die Überlagerung 40 direkt in der Steuerung vorzunehmen. Ferner kann es auch zweckmäßig sein, eine Cloud-basierte Steuerung für den Fertigungsprozess 4 und für das beschriebene Verfahren zur Überwachung anzuwenden. In diesem Fall wäre das Computersystem 30 nicht oder nur teilweise in räumlicher Nähe des Fertigungsprozesses 4 angeordnet.

Mittels der Überlagerung 40 wird im Computersystem 30 anhand von ermittelten Referenzdaten, auf die ebenfalls noch näher eingegangen wird, berechnet, ob die Temperaturanomalien 18 einem befriedigenden Auftrag an viskoser Masse 14 entsprechen (Temperaturauswertung 42). Liegt eine positive Temperaturauswertung 44 vor, so wird der Fertigungsprozess 4 fortgesetzt. In diesem Fall wird über das Transportband 32 das Bauteil 34 in die Fertigungsanlage 38 eingebracht. Der Fertigungsprozess wird wie geplant durchgeführt und anschließend wird das Bauteil 34 der weiteren Verwendung zugeführt. Sollte jedoch bei der Überlagerung 40 die Situation auftreten, dass die ermittelten Temperaturanomalien 18 nicht den Vorgaben entsprechen (negative Temperaturauswertung 46), so kann dies auf einen Qualitätsmangel beim Auftragen der viskosen Masse 14 auf die definierten Benetzungsflächen 6 hindeuten.

In diesem Fall wird mittels des Computersystems 30 eine Datenanalyse 48 durchgeführt. Hierbei wird mittels der vorliegenden Informationen aus der Thermografie-Aufnahme 12, der Abbildung 8, aber auch mittels weiterer, bisher nicht erwähnter Prozessparameter wie beispielsweise die Funktionsweise der Applikationsnase 5 des Dispenser 3 ausgewertet. Dabei kann beispielsweise als Ergebnis stehen, dass die Applikationsnase 5 verstopft ist oder der Druck zur Bewegung der viskosen Masse 14 im Dispenser 3 zu niedrig ist. Auch die Bewegungssteuerung der Applikationsnase 5 kann fehlerhaft sein. Auf Basis dieser Informationen wird mittels der Datenanalyse 48 eine Maßnahme 22 ermittelt, die möglichen Qualitätsmängeln im Dispenser-Auftrag 2 entgegenwirkt. Diese Maßnahme 22 kann beispielsweise eine Reinigung der Applikationsnase 5 oder eine Adaption der Steuerung der Applikationsnase 5 sein. Ferner kann die Maßnahme 22 auch darin bestehen, das betrachtete Bauteil 34 aus dem Prozess auszupassen und erneut mit viskoser Masse 14 zu versehen.

In Figur 3 ist beispielhaft eine Applikationsoberfläche 10 ausgestaltet als Leiterplattenoberfläche 10 dargestellt. Auf diese Leiterplattenoberfläche 10 wird mittels Dispenser-Auftrag 2 eine viskose Masse 14 in Form einer Lotpaste 14 aufgetragen. Dabei handelt es sich bei den Figuren 3a, 3b und 3c jeweils um denselben Ausschnitt der Leiterplattenoberfläche 10, wobei in Figur 3a eine Infrarotkamera zum Einsatz kommt. Somit handelt es sich hierbei um eine Thermografie-Aufnahme 12, die jedoch sehr kontrastreich ist. Es treten dabei Temperaturanomalien 18 auf, die jedoch zu ihrer Umgebung einen gewissen fließenden Übergang aufweisen. An den festgelegten Benetzungsflächen 6, die auch als Justierpunkte 16 dienen, ist auffällig, dass die Temperatur messbar geringer ist als an den Umgebungsflächen. In Figur 3b ist die Abbildung 8 derselben Leiterplattenoberfläche 10 gegeben, wobei es sich hier um einen Auszug aus dem CAD-Modell, das zur Konstruktion der Leiterplatte 34 erstellt wurde, handelt. Grundsätzlich wäre hierfür auch eine während des Prozesses ermittelte lichtfotografische Aufnahme zweckmäßig. Dies wäre insbesondere dann zweckmäßig, wenn durch den Prozess weitere Veränderungen zu erwarten wären, die mittels der rein errechneten CAD-Abbildung 8 nicht zu erkennen wären. Auch die Abbildung 8 enthält die beschriebenen Benetzungsflächen 6, die wiederum die Justierpunkte 16 darstellen.

Da wie in Figur 3a dargestellt, die Übergänge der Thermografie-Aufnahme 12 fließend sind, ist es zweckmäßig, einen Temperaturschwellenwert 20 zu definieren, um eine scharfe Grenze für die Temperaturanomalie 18 darzustellen. In Figur 3c ist zu erkennen, dass die so geschärften Temperaturanomalien 18 insbesondere um die festgelegten Benetzungsfläche 6 ausgeprägt sind.

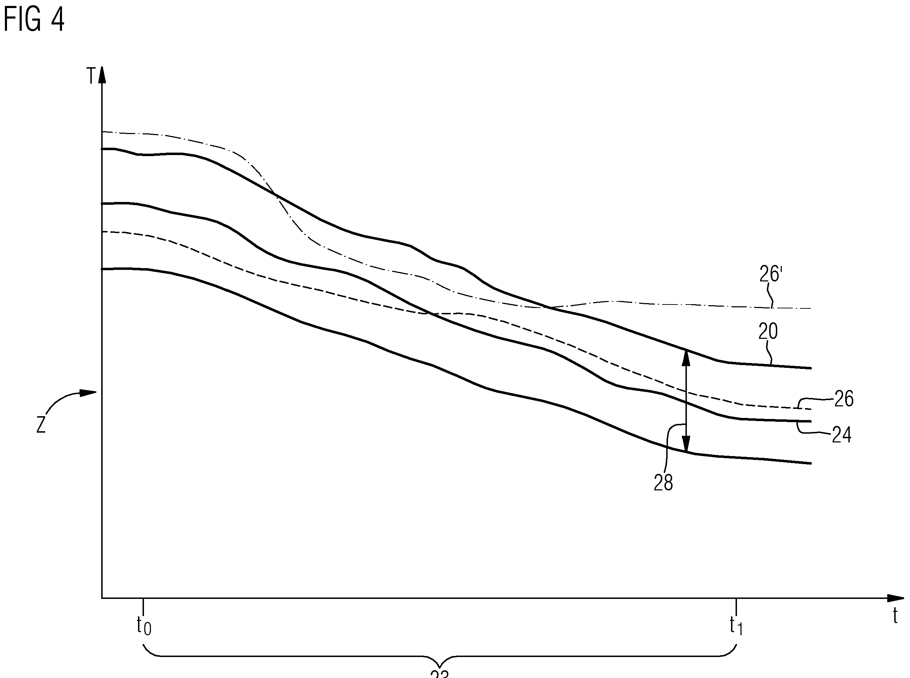

Nun kann durch die beschriebenen Thermografie-Aufnahmen 12 in Figur 3 zwar eine scharf eingegrenzte Temperaturanomalie 18 mittels des Temperaturschwellwerts 20 visuell dargestellt werden, für die Datenanalyse 48 und die elektronische Überlagerung 40 der Abbildung 8 und der Thermografie-Aufnahme 12 und für die weitere Prozesssteuerung des Dispenser Auftrages 2 bzw. des Lötprozesses ist es zweckmäßig, detailliertere Kriterien für die Qualität des Dispenser Auftrags 2 festzulegen. Hierzu gibt es mehrere zweckmäßige und mögliche Vorgehensweisen, beispielhaft soll an Figur 4 eine mögliche Vorgehensweise zur Auswertung beschrieben werden. Anhand von dem Punkt Z, einer beispielhaften Benetzungsfläche in Figur 2b wird die dort aufgenommene Temperatur in Figur 4 in Abhängigkeit von der Zeit beschrieben.

In Figur 4 ist ein Zeit-Temperatur-Diagramm am Punkt Z aus Figur 3 gegeben. Hierbei ist auf der Zeitachse t der Punkt t₀ und der Punkt t₁ festgelegt. Der Punkt t₀ ist der Zeitpunkt, bei dem die viskose Masse 14 auf die Benetzungsfläche 6, also hier auf den Punkt Z, mittels des Dispensers 3 aufgebracht wird. Der Zeitpunkt t₁ ist der Betrachtungszeitpunkt. Der Zeitraum zwischen t₀ und t₁ wird als Zeitintervall 23 betrachtet. Nun ist es möglich, lediglich einen singulären Zeitpunkt zu t₁ oder den Temperaturverlauf an der Stelle Z während des Temperaturintervalls 23 zu betrachten.

Betrachtet man den Temperaturverlauf während des Zeitintervalls 23, so ist es zweckmäßig, einen Referenzverlauf 24 aufzunehmen, bei dem mittels Prozessauswertung ein qualitativ hochwertiger Auftrag an Flussmittel 14 erfolgt ist. Es ist zweckmäßig, um den Referenzverlauf 24 einen Toleranzbereich 28 zu definieren, durch den sich eine obere und untere Begrenzungslinie zum Referenzverlauf 24 ergibt. Bei der Betrachtung nur eines singulären Zeitpunktes handelt es sich um eine obere und untere Begrenzungstemperatur zu diesem Zeitpunkt. Der bezüglich der Temperaturachse T obere Verlauf des Toleranzbereiches 28 stellt dabei bevorzugt den Temperaturschwellwert 20 in Abhängigkeit von der Zeit t dar.

Betrachtet man nun den tatsächlich vorliegenden Temperatur-Zeit-Verlauf im Zeitintervall 23, so sollte dieser Verlauf 26 möglichst im Toleranzbereich 28 um den Referenzverlauf 24 liegen. In diesem Fall wären die Qualitätskriterien für das Aufbringen der viskosen Masse 14 erfüllt und die Leiterplatte würde (wenn diese Qualitätsbedingungen für alle Benetzungsflächen 6 ausreichend sind) einem weiteren Prozessschritt zugeführt werden (positive Temperaturauswertung 44 in Fig. 1). Bei dem Beispiel der Lotpaste oder bei einer Sinterpaste wäre dieser weitere Prozessschritt eine Wärmebehandlung, bei einer Klebepaste wäre es gegebenenfalls ein Aushärtungsschritt. Sollte jedoch ein betrachteter Temperatur-Zeit-Verlauf 26' außerhalb des Toleranzbereiches 28 liegen, so kann wie bezüglich Figur 1 beschrieben, eine Maßnahme 22 im Fertigungsprozess 4 eingeleitet werden (negative Temperaturauswertung 46). Wie bereits dargelegt ist das Aufbringen einer Lotpaste als viskose Masse 14 auf einer Leiterplatte lediglich beispielhaft zu sehen, alternativ kann derselbe automatisierte Ablauf auch auf Kleberaupe oder den Dispenser-Auftrag eines Unterfüllmaterials oder Sinterpaste gerichtet sein.

Bei der Betrachtung des Temperatur-Zeit-Verlaufs 26 gemäß Figur 4 wird mittels der Infrarotkamera 36 eine zeitabhängige Thermografie-Aufnahme 12 erstellt. Es wird demnach ein Thermografie-Video entlang des Zeitintervalls 23 aufgenommen. Eine zeitabhängige Aufnahme hat den Vorteil, dass eine detailliertere Bewertung des tatsächlichen Dispenser Auftrages 2 und des Verdampfungsverhaltens vorgenommen werden kann. Die Entscheidung, ob genügend viskose Masse 14 aufgetragen ist, die durch die Datenanalyse 40 erfolgt, kann somit sicherer getroffen werden, da es sich um einen längeren Zeitraum handelt. Grundsätzlich kann allerdings auch ein singulärer Zeitpunkt, beispielsweise zum Zeitpunkt t1, aufgenommen werden und eine Betrachtung erfolgen, ob der so aufgenommene Temperaturmesswert unterhalb des Schwellenwertes 20 liegt.

Der Vorteil des beschriebenen Verfahrens gegenüber dem Stand der Technik besteht also darin, dass die Erkenntnis über lokale Temperaturanomalien 18 aufgrund der Verdampfung von Bestandteilen der viskosen Masse 14 genutzt wird, um Rückschlüsse über die Menge der aufgetragenen viskosen Masse 14 an definierten Orten, also den Benetzungsflächen 6, zu ermitteln und daraus ggf. qualitätssichernde Maßnahmen 22 für den Fertigungsprozess 4. Durch diese Erkenntnis und durch diese eingeleiteten Maßnahmen 22 kann die Qualität des gesamten Produktes, des Bauteils 34, verbessert werden und eine Ausschussrate gesenkt werden.

### Bezugszeichenliste

- 2: Dispenser Auftrag
- 3: Disperser
- 4: Fertigungsprozess
- 5: Applikationsnase
- 6: Benetzungsfläche
- 8: Abbildung
- 10: Applikationsoberfläche
- 12: Thermographieaufnahme
- 14: viskose Masse
- 16: Justierpunkte
- 18: Emissionsanomalien
- 20: Emissionsschwellwert
- 22: Maßnahme
- 23: Zeitintervall
- E: Emissionsgrad
- T: Temperatur
- 24: Referenzverlauf
- 26: betrachteten E-t Verlauf
- Z: definierte Benetzungsfläche
- 28: Toleranzbereich
- 30: Computersystem
- 32: Transportband
- 34: Bauteil
- 36: Infrarotkamera
- 38: Fertigungsanlage
- 40: Überlagerung Abbildung/Aufnahme
- 42: Auswertung
- 44: positive Temperaturauswertung
- 46: negative Temperaturauswertung
- 48: Datenanalyse

## Patentansprüche

1. Verfahren zur Durchführung eines Dispenser Auftrags (2) einer viskosen Masse (14) in einem Fertigungsprozess (4) mit einem Verfahren zur Überwachung des Dispenser Auftrags (2) umfassend folgende Schritte:
- Festlegen von Benetzungsflächen (6) in Bezug auf eine Abbildung (8) einer Applikationsoberfläche (10)
- Erzeugen einer Thermographie-Aufnahme (12) von der selektiv mit viskosen Masse (14) versehenen Applikationsoberfläche (10),
- Festlegen von Justierpunkten (16) auf der Applikationsoberfläche (10), die auf der Abbildung (8) und auf der Thermographie-Aufnahme (12) identifizierbar sind,
- Überlagern der Abbildung (8) und der Thermographie-Aufnahme (12) anhand der Justierpunkte (16)
- Vergleichen der Position von Emissionsgrad-Anomalien (18) auf der Applikationsoberfläche (10), die mittels der Thermographie-Aufnahme (12) identifiziert werden mit der Position der Benetzungsfläche (6) auf der Abbildung (8).

2. Verfahren nach Anspruch 1, **dadurch gekennzeichnet, dass** Dispenser-Auftrag (2) der viskosen Masse durch Dispensen (3) von Klebstoffen, Lotpasten, Leitklebern, Unterfüllmaterialien und/oder Lacken erfolgt.

3. Verfahren nach Anspruch 2, **dadurch gekennzeichnet, dass** die durch den Dispenser (3) aufgetragene viskose Masse (14) eine Viskosität aufweist, die bei 21°C höher als 100 mPa s, insbesondere höher als 1000 mPa s ist

4. Verfahren nach Anspruch 3, **dadurch gekennzeichnet, dass** ein Emissionsschwellwert (20) für die Emissionsanomalien (18) festgelegt ist.

5. Verfahren nach Anspruch 4, **dadurch gekennzeichnet, dass** eine Maßnahme (22) zur Beeinflussung des Fertigungsprozess (4) eingeleitet wird, wenn innerhalb eines Zeitintervalls (23) nach Aufbringen der viskosen Masse (14) eine mittels der Thermographie-Aufnahme (12) bestimmter Emissionsgrad (E) an einer Benetzungsfläche (6) jenseits des Emissionsschwellwertes (20) liegt.

6. Verfahren nach Anspruch 5, **dadurch gekennzeichnet, dass** der Emissionsgrad (E) und/oder die Temperatur (T) als Funktion der Zeit (t) betrachtet wird.

7. Verfahren nach Anspruch 6, **dadurch gekennzeichnet, dass** ein Referenzverlauf (24) einer Emissionsgrad -Zeit-Kurve an einer definierten Benetzungsfläche (Z) aufgenommen wird und mit dem betrachteten Emissionsgrad -Zeit-Verlauf (26) verglichen wird.

8. Verfahren nach Anspruch 7, **dadurch gekennzeichnet, dass** ein Toleranzbereich (28) des Referenzverlaufs (24) definiert wird, und die Maßnahme (22) eingeleitet wird, wenn der betrachtete Emissionsgrad -Zeit-Verlauf (26), außerhalb des Toleranzbereichs (28) liegt.

9. Verfahren nach Anspruch 5 bis 8, **dadurch gekennzeichnet, dass** die Maßnahme dann erfolgt, wenn der Emissionsgrad (E) an der Benetzungsflächen (6) über dem Emissionsschwellwert (20) liegt.

10. Verfahren nach einem der vorhergehenden Ansprüchen, **dadurch gekennzeichnet, dass** die Thermographie-Aufnahme (12) eine Mehrzahl von derartigen Aufnahmen innerhalb eines Zeitraums umfasst.

11. Verfahren nach einem der Ansprüche 5 bis 10, **dadurch gekennzeichnet, dass** als Maßnahme (22) ein erneutes Auftragen der viskosen Masse (14) an der detektierten Benetzungsflächen eingeleitet wird.

12. Verfahren nach einem der Ansprüche 5 bis 11, **dadurch gekennzeichnet, dass** als Maßnahme (22) eine Reinigung von Dispenser-Auftragsdüsen eingeleitet wird.

13. Verfahren nach einem der vorhergehenden Ansprüche, **dadurch gekennzeichnet, dass** die Abbildung (8) eine lichtfotographische Aufnahme der zu beobachtenden Applikationsoberfläche (10) ist.

14. Computerprogramm umfassend einen digitalen Zwilling zur Steuerung eines Verfahrens zur Überwachung eines Dispenser-Auftrags (2) einer viskosen Masse (14) in einem Fertigungsprozess (4) nach einem der Ansprüche 1 bis 11, in dem die Abbildung (8) als digitale Abbildung (8) vorliegt und die Benetzungsflächen (6) sowie die Justierpunkte (16) als Bestandteil der digitalen Abbildung (8) gespeichert sind.

15. Computersystem mit einem Computerprogramm nach Anspruch 14.
